(19) Europäisches Patentamt
European Patent Office
Office européen des brevets

(11) Veröffentlichungsnummer: **0 168 647**
**A2**

(12) # EUROPÄISCHE PATENTANMELDUNG

(21) Anmeldenummer: **85107398.1**

(22) Anmeldetag: **14.06.85**

(51) Int. Cl.⁴: **H 04 Q 7/04**

(30) Priorität: **19.07.84 DE 3426561**

(43) Veröffentlichungstag der Anmeldung: **22.01.86 Patentblatt 86/4**

(84) Benannte Vertragsstaaten: **DE FR GB IT**

(71) Anmelder: **ANT Nachrichtentechnik GmbH, Gerberstrasse 33, D-7150 Backnang (DE)**

(72) Erfinder: **Sperlich, Josef, Dipl.-Ing., Kelterweg 52, D-7150 Backnang (DE)**

(74) Vertreter: **Wiechmann, Manfred, Dipl.-Ing., ANT Nachrichtentechnik GmbH Gerberstrasse 33, D-7150 Backnang (DE)**

(54) **Mobilfunksystem für die Übertragung digitaler Signale.**

(57) Die Erfindung betrifft ein Mobilfunksystem für die Übertragung digitaler Signale zwischen mobilen Teilnehmern und stationären Teilnehmern, die mit Funkvermittlungsstellen und daran angeschlossenen Feststationen in Verbindung stehen. Damit die Feststationen und die mobilen Teilnehmer mit geringer Sendeleistung betrieben werden können, senden die Feststationen die von den Funkvermittlungsstellen gelieferten Signalkanäle (KS1 ... KSn), durch Multiplexen in Signalrahmen zusammengefaßt, aus und besitzen die Feststationen für jeden der von den mobilen Teilnehmern einzeln ausgesendeten Signalkanäle einen eigenen Empfänger (E1 ... En).

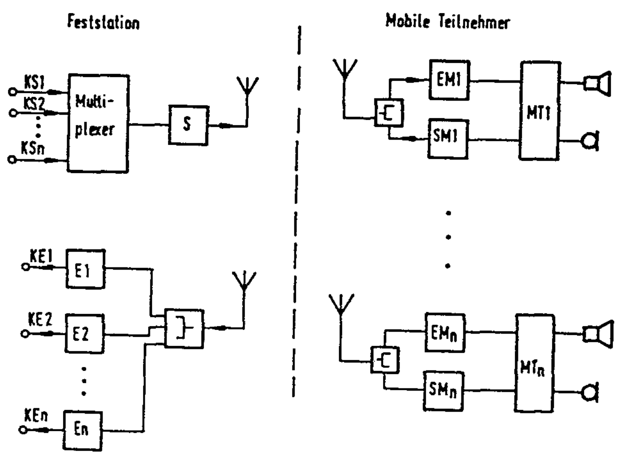


EP 0 168 647 A2

# Mobilfunksystem für die Übertragung digitaler Signale

Die vorliegende Erfindung betrifft ein Mobilfunksystem für die Übertragung digitaler Signale zwischen mobilen Teilnehmern und stationären Teilnehmern, die mit Funkvermittlungsstellen in Verbindung stehen, wobei Feststationen die von den mobilen Teilnehmern ausgesendeten Signale empfangen und sie an die Funkvermittlungsstellen weiterleiten bzw. die von den Funkvermittlungsstellen kommenden Signale an die mobilen Teilnehmer aussenden.

Ein derartiges Mobilfunksystem ist aus der DE-OS 22 28 327 bekannt.

Es ist nun Aufgabe der Erfindung, ein Mobilfunksystem der genannten Art anzugeben, bei dem die Feststationen mit wenig Aufwand realisierte Sendeeinrichtungen besitzen, die mit möglichst geringer Speiseleistung auskommen, und die mobilen Teilnehmer mit Sendern ausgestattet sind, von denen eine möglichst geringe Sendeleistung gefordert wird und die daher leicht und platzsparend gebaut werden können.

Erfindungsgemäß wird diese Aufgabe dadurch gelöst, daß die Feststationen die von den Funkvermittlungsstellen gelieferten Signalkanäle, durch Multiplexen in Signalrahmen zusammengefaßt, aussenden und daß die Feststationen für jeden der von den mobilen Teilnehmern einzeln ausgesendeten Signalkanäle einen eigenen Empfänger besitzen.

Zweckmäßige Ausführungen dieses Mobilfunksystems gehen aus den Unteransprüchen hervor.

Anhand eines in der Zeichnung dargestellten Ausführungsbeispiels wird nachfolgend die Erfindung näher erläutert. Es zeigen:

Fig. 1 das Schema eines Mobilfunksystems,
Fig. 2 die erfindungsgemäße Aufteilung der Sender und Empfänger bei den Feststationen und mobilen Teilnehmern,
Fig. 3 das Funktionsschema einer Funkvermittlungsstelle,
Fig. 4 das Funktionsschema einer Feststation,
Fig. 5 das Funktionsschema eines Funktelefons und
Fig. 6 den Aufbau von Signalrahmen.

Bekanntlich ist ein Mobilfunknetz in mehrere Funkverkehrsbereiche aufgeteilt, zu denen jeweils, wie der Fig. 1 zu entnehmen ist, eine Funkvermittlungsstelle 1 und eine daran angeschlossene Feststation 2 gehören. Die Feststation sendet Signale, die über die Funkvermittlungsstelle von einem stationären Teilnehmer 3 kommen, an den gesuchten mobilen Teilnehmer 4 aus bzw. empfängt von diesem mobilen Teilnehmer 4 Signale und leitet sie an die Funkvermittlungsstelle 1 weiter. Die Verbindung zwischen der Funkvermittlungsstelle 1 und dem stationären Teilnehmer 3 wird über die Fernsprechvermittlung 5 eines Fernsprechnetzes hergestellt. In der Fig. 1 ist angedeutet, daß die Funkvermittlungsstelle 1 auch Verbindungen zu anderen Funkvermittlungsstellen und Feststationen in dem Mobilfunknetz haben kann.

Die Fig. 2 zeigt links von der strichlierten Linie eine Feststation mit einem Empfangs- und einem Sendeteil. Der Sendeteil besitzt nur einen Sendeverstärker S, über den alle mit Hilfe eines Multiplexers in einem breitbandigen Signalrahmen zusammengefaßten Signalkanäle KS1 ... KSn abgestrahlt werden. Dadurch, daß hier für viele verschiedene Signalkanäle nur ein Sender verwendet wird, reduziert sich der Aufwand erheblich und es wird eine wesentlich geringere Speiseleistung im Sendeteil benötigt als wenn für jeden Signalkanal ein eigener Sender vorhanden wäre. Die Empfangseinheit der Feststation besteht dagegen aus mehreren Empfängern E1 ... En, von denen jeder einzelne nur eine geringe Leistungsaufnahme hat und in integrierter Bauweise kompakt ausgeführt sein kann. Jeder der Empfänger E1 ... En ist einem von mehreren Signalkanälen KE1 ... KEn zugeordnet, die getrennten Frequenzbändern zugeteilt sind. Eine derartige Empfangseinheit erlaubt es, daß die mobilen Teilnehmer MT1 ... MTn, rechts von der strichlierten Linie in Fig. 2, mit relativ geringer Bitrate aussenden können, weil jeder mobile Teilnehmer seinen Signalkanal an den ihm zugeordneten Empfänger in der Feststation abstrahlen kann, ohne daß alle Signalkanäle in einen breitbandigen Rahmen mit hoher Bitrate zusammengefaßt werden. Da also die Bitrate der von den mobilen Teilnehmern MT1 ... MTn ausgesendeten Signal gering gehalten werden kann, brauchen die Sender SM1 ... SMn der mobilen Teilnehmer nicht für eine sehr hohe Sendeleistung ausgelegt zu sein. Dies bringt Vorteile für die mobilen Teilnehmer bezüglich Verlustleistung, Gerätegröße und Gewicht. Die Empfänger EM1 ... EMn der mobilen Teilnehmer trennen aus dem gesamten von der Feststation ausgesendeten Signalrahmen ihren eigenen Signalkanal heraus.

Wie für ein derartig organisiertes Mobilfunksystem die Funkvermittlungsstelle, die Feststation und das Funktelefon des mobilen Teilnehmers ausgeführt sein können, wird anschließend näher beschrieben.

Der Fig. 3 ist das Funktionsschema einer Funkvermittlungsstelle zu entnehmen. Über Schnittstellen 6, 7, 8 gelangen pulskodemodulierte Sprachsignalkanäle vom Fernmeldenetz oder anderen Funkvermittlungsstellen und Datensignalkanäle an ein Koppelfeld 9, worin die Vermittlung dieser Signalkanäle erfolgt. In der Regel weisen die pulskodemodulierten Sprachsignalkanäle eine Bitrate von 2 Mbit/s auf. Sofern das Koppelfeld an seinen Ausgängen die pulskodemodulierten Signale ebenfalls mit der Bitrate von 2 Mbit/s abgibt, sind Multiplexer 10 vorgesehen, die die Signalkanäle in mehrere pulskodemodulierte Signalkanäle mit einer geringeren Bitrate von 64 kbit/s umsetzen. Diese pulskodemodulierten Signalkanäle der Bitrate 64 kbit/s werden dann in einem Kodewandler 11 in einen Basiskode mit einer Bitrate von z.B. 4,8 kbit/s umgewandelt. Solch ein Kodewandler kann zweckmäßigerweise ein Vocoder sein. Die an den Ausgängen des Kodewandlers 11 vorliegenden basiskodierten Sprachsignalkanäle und auch die ebenfalls basiskodierten (4,8 kbit/s) Datensignalkanäle können, falls gefordert, in einem Schlüsselgerät 12 verschlüsselt werden. Sämtliche Signalkanäle an den Ausgängen des Schlüsselgerätes 12 werden schließlich in einem Multiplexer 13 zu einem gemeinsamen Übertragungskanal mit der Bitrate von 2 Mbit/s zusammengefaßt und dieser wird über eine Schnittstelle 14 einer Feststation zugeleitet.

Diesem Übertragungskanal wird mittels des Multiplexers 13 auch noch ein Kanal mit Steuerungssignalen für die Feststation und ein Organisationskanal hinzugefügt, der alle Signalisierung vor und nach der Nutzsignalübertragung zwischen der Funkvermittlungsstelle und dem Funktelefon des mobilen Teilnehmers abwickelt. Diese Steuerungs- und Organisationssignale kommen von einer Steuerungseinheit 15 der Funkvermittlungsstelle. Über eine Schnittstelle 16 gelangen an die Steuereinheit 15 auch Steuerungs- und Organisationssignale von anderen Funkvermittlungsstellen bzw. es werden Steuerungs- und Organisationssignale aus der Steuereinheit 15 an andere Funkvermittlungsstellen weitergeleitet.

Ein an der Schnittstelle 14 anliegender, von einer Feststation stammender Übertragungskanal wird zunächst in einem Demultiplexer 13 in seine einzelnen Signalkanäle aufgeteilt. Dabei wird der Steuerungs- und Organisationskanal der Steuereinheit 15 zugeführt und die anderen Signalkanäle, die Sprach- und Datensignalkanäle, werden in dem Schlüsselgerät 12 entschlüsselt. Die basiskodierten Sprachsignale erfahren in dem Kodewandler 11 eine Rückwandlung in pulskodemodulierte Sprachsignale. Nach der Kodewandlung werden dann die Sprachkanäle mit der Bitrate von 64 kbit/s durch die Multiplexer 10 in Sprachsignalkanäle mit der Bitrate von 2 Mbit/s zusammengefaßt und dem Koppelfeld 9 zugeleitet. Von dort gelangen die Sprachsignalkanäle über die Schnittstellen 6, 7 an das Fernmeldenetz bzw. an andere Funkvermittlungsstellen. Die Datensignalkanäle im Basiskode (4,8 kbit/s) werden direkt nach der Entschlüsselung zum Koppelfeld 9 und dann über die Schnittstelle 8 zum Datennetz geführt.

Die Fig. 4 zeigt das Funktionsschema einer Feststation, welche an die vorher beschriebene Funkvermittlungsstelle über die Schnittstelle 17 angeschlossen ist.

Ein von der Vermittlungsstelle kommender Übertragungskanal mit der Bitrate von 2 Mbit/s wird zuerst einer Schaltungseinheit 18, welche die Taktrückgewinnung durchführt, und dann einem Schaltungsblock 19 zugeleitet, in dem der Steuerungs- und der Organisationssignalkanal von den Nutzsignalkanälen abgetrennt wird. Die Steuerungs- und Organisationssignale werden in einer Steuerungseinheit 20, welche den Sende- und Empfangsbetrieb der Feststation überwacht und steuert, weiterverarbeitet. Diese Steuereinheit 20 gibt selbst einen neuen Organisationskanal mit geänderter und eventl. zusätzlicher Information für den (die) mobilen Teilnehmer ab. Der neue Organisationskanal wird mit den Nutzkanälen in einem Multiplexer 21 zu einem Signalrahmen zusammengefaßt, der in einem nachfolgenden Kodewandler 22 in einen Übertragungskode umgesetzt wird, der für die Funkübertragung möglichst störungsunanfällig ist. In dem Schaltungsblock 22 mit dem Kodewandler bekommt der Signalrahmen noch ein Synchronisationswort hinzugefügt. Nach einer Modulation (z.B. FSK, PSK, QAM) in einem Modulator 23 wird der Signalrahmen einem Sendeverstärker 24 zugeführt und abgestrahlt.

Die Feststation besitzt für jeden der von den mobilen Teilnehmern ausgesendeten Signalkanäle einen eigenen Empfänger. Es sind ein Empfänger EM für einen Meßsignalkanal, ein Empfänger EOG für einen Organisationsignalkanal und mehrere Empfänger E1 ... En für die Nutzsignalkanäle vorhanden. Alle an einen Empfangsverstärker 25 angeschlossenen Empfänger enthalten einen Demodulator, eine Taktrückgewinnungsschaltung, eine Kanalsynchronisationseinrichtung und einen Kodewandler, der den Übertragungskode in den Basiskode umwandelt.

Die Empfänger E1 ... En für die Nutzsignalkanäle und der Empfänger EM für den Meßsignalkanal besitzen zusätzlich noch Einrichtungen zur Messung der Laufzeit und der Qualität der empfangenen Signale. Dabei wird in dem Empfänger EM des Meßsignalkanals die Laufzeit und Qualität, mit der eine Nachbarfeststation das von einem mobilen Teilnehmer ausgesendete Signal empfängt, ermittelt. Die Meßergebnisse des Meßsignalempfängers EM und des zu dem fraglichen mobilen Teilnehmer gehörenden Nutzsignalempfängers E1 ... En werden zur Auswertung an die Steuereinheit 20 übergeben.

Sämtliche Nutzsignalkanäle werden zusammen mit dem Organisationssignalkanal und den von der Steuereinheit ausgewerteten Meßergebnissen einem Schaltungsblock 26 zugeführt, in dem die verschiedenen Laufzeiten sämtlicher Signale ausgeglichen und dann alle Signalkanäle durch Multiplexen zu einem einzigen Übertragungskanal zusammengefaßt werden. Dieser Übertragungskanal gelangt über die Schnittstelle 17 zu der Funkvermittlungsstelle. Die Funkvermittlungsstelle veranlaßt aufgrund der erhaltenen Meßergebnisse, diejenige Feststation in den Funkverkehr mit dem mobilen Teilnehmer einzuschalten, welche die beste Empfangssignalqualität aufweist.

Die Steuereinheit 20 in der Feststation erledigt neben der Überwachung und Steuerung der einzelnen Schaltungsblöcke auch die Frequenzaufbereitung für den Sender und die Empfänger. So stimmt die Steuereinheit den Sendermodulator 23 auf den Breitbandfrequenzbereich $f_B$ und die Empfänger EM, EOG, E1 ... En auf die Frequenzkanäle $f_M$, $f_{OG}$, $f_1$ ... $f_n$ ab.

Der Fig. 5 ist das Funktionsschema eines Funktelefons zu entnehmen, mit dem die mobilen Teilnehmer ausgestattet sind.

Ein von einer Feststation ausgesendeter Signalrahmen wird von der Antenne des Funktelefons empfangen und über eine Sende-Empfangsweiche 27 einem Empfangsverstärker und Demodulator 28 zugeführt. Aus dem demodulierten Signalrahmen wird im Schaltblock 29 die Takt- und Rahmensynchronisation zurückgewonnen, welche für die Steuerung der Schaltungseinheiten des Funktelefons ausgenutzt wird. Dieser Schaltblock 29 mißt auch ständig die Qualität des Empfangssignals, wovon ein Umschalten auf eine Funkverbindung zu einer anderen Feststation abhängt, und er enthält die Frequenzaufbereitung für das gesamte Funktelefon.

Ein Kodewandler 30 setzt den Übertragungskode des demodulierten Signalrahmens in einen Kode mit niedrigerer Bitrate um. In einem anschließenden Schaltblock 31 wird, gesteuert durch die Takt- und Rahmensynchronisation, aus dem gesamten Signalrahmen der dieses Funktelefon betreffende Nutzsignalkanal ausgeblendet und ebenfalls der Organisationssignalkanal abgetrennt, welcher einer Funktelefonsteuerung 32 zugeführt wird. Der Nutzsignalkanal wird in einem Schlüsselgerät 33, falls ein solches vorhanden ist, entschlüsselt. Die am Ausgang des Schlüsselgerätes im Basiskode vorliegenden Datensignale gelangen an einen Datenausgang, und die basiskodierten Sprachsignale werden in einem Schaltblock 34 z.B. einem Vocoder nach einer Kodewandlung in analoge Sprachsignale umgesetzt.

Ein auszusendendes analoges Sprachsignal wird in dem Schaltblock 34 in ein Digitalsignal im Basiskode (4,8 kbit/s) z.B. Kodewandlung in den Basiskode (4,8 kbit/s) mittels eines Vocoders umgesetzt. Dann werden in dem Schlüsselgerät 33 diese basiskodierten Sprachsignale und evtl. an einem Dateneingang anliegende Datensignale verschlüsselt. Der verschlüsselte Nutzsignalkanal führt zusammen mit einem von der Funktelefonsteuerung 32 gelieferten Organisationssignalkanal an einen Kanalumschalter 35, der entweder bei Bedarf zeitgerecht den Organisationssignalkanal, falls kein Nutzsignal vorliegt, oder dann, wenn die Funkverbindung sichergestellt ist, den Nutzsignalkanal an einen Kodewandler 36, der die Wandlung vom Basiskode auf den Übertragungskode vornimmt, durchschaltet. Der im Übertragungskode vorliegende Nutzsignalkanal wird anschließend über einen Modulator und Sendeverstärker 37 zur Sende-Empfangsweiche 27 geleitet.

Die Fig. 6 zeigt mehrere von der Feststation zum mobilen Teilnehmer bzw. vom mobilen Teilnehmer zur Feststation übertragene Signalrahmen.

Der Signalrahmen a), welcher von einer Feststation zu den mobilen Teilnehmern übertragen wird, setzt sich zusammen aus einem Synchronisationswort Sy, einem Organisationssignalkanal OG und mehreren Nutzsignalkanälen KS1 ... KSn, die alle zeitlich gestaffelt angeordnet sind.

Ein Nutzkanalrahmen c), der jeweils von einem mobilen Teilnehmer zu einer Feststation übertragen wird, hat die gleiche zeitliche Dauer wie der mehrere Kanäle aber eine höhere Bitrate aufweisende Signalrahmen a). Der Nutzkanalrahmen c) enthält neben dem Nutzsignal KEx eine Synchronisationsinformation Syn und eine Signalisierungsinformation Sig, die während einer Nutzsignalübertragung vom mobilen Teilnehmer der Feststation mitgeteilt wird.

Wenn ein mobiler Teilnehmer kein Nutzsignal aussendet, hat er Zugriff zum Organisationskanal. Der Organisationskanalrahmen b), dem eine eigene Kanalfrequenz zugeteilt ist, hat die gleiche Bitrate wie der Nutzkanalrahmen c). Dieser Organisationskanalrahmen b) ist in zwei Abschnitte unterteilt. Der erste Abschnitt enthält Zeitschlitze F1 ... Fm, zu denen die mobilen Teilnehmer freien Zugriff haben. Im zweiten Abschnitt sind Zeitschlitze Z1 ... Zm vorgesehen, deren Belegung die Funkvermittlungsstelle bzw. Feststation vorgibt; d.h. die Funkvermittlungsstelle bzw. Feststation adressiert den Zeitschlitz Z1 ... Zm, den ein mobiler Teilnehmer benutzen muß. Da die mobilen Teilnehmer unterschiedlich weit von der Feststation entfernt sind, haben die übertragenen Signale unterschiedliche Laufzeiten. Jeder Zeitschlitz weist daher ein Toleranzfeld L für die Laufzeit auf.

Die von den Feststationen zu den mobilen Teilnehmern bzw. in entgegengesetzte Richtung übertragenen Signalrahmen werden aus folgenden Gründen in Überrahmen zu 10 Signalrahmen zusammengefaßt. Die mobilen Teilnehmer orientieren sich zunächst auf das am besten zu empfangende Signal von einer benachbarten Feststation. Um aber während des Fortbewegens sich auf neue Feststationen orientieren zu können, müssen die Signale die von diesen Feststationen ausgesendet werden, gemessen werden. Es ist deshalb vorgesehen, daß der mobile Teilnehmer zunächst in nur einem Signalrahmen des Überrahmens und zwar im Organisationssignalkanal für sich bestimmte Informationen z.B. zur Teilnehmersuche erwartet, während in den übrigen Signalrahmen für diesen mobilen Teilnehmer keine Information enthalten ist. Er kann deshalb während der Übertragungszeit der anderen Signalrahmen die Signale benachbarter Feststationen messen. Zweckmäßigerweise erhält der mobile Teilnehmer nur im Signalrahmen mit gleicher Endnummer wie die Teilnehmer-Nr. Information im Organisationskanal (z.B. die Rufinformation, d.h. das Suchsignal nach dem mobilen Teilnehmer).

Um dem mobilen Teilnehmer genügend Zeit für die Antwort auf das Suchsignal zu geben, wird nicht sofort geantwortet, sondern um zwei Rahmen später. Damit ist Verarbeitungszeit vorhanden, die der mobile Teilnehmer benötigt, um die Antwort aufzubereiten und im Rückkanal (Organisationskanal) an die Feststation zu melden.

Eine flexiblere Anpassung des Mobilfunknetzes an die jeweilige Funkverkehrsdichte wird ermöglicht, wenn das Übertragungsfrequenzband für den von der Feststation ausgesendeten Signalrahmen auf mehrere Frequenzbänder aufgeteilt würde. Das würde heißen, daß z.B. einem ersten Frequenzband ein Signalrahmen mit dem Organisationskanal und der ersten Hälfte der vorhandenen Nutzsignalkanäle und einem zweiten Frequenzband ein Signalrahmen mit der zweiten Hälfte der Nutzsignalkanäle zugeordnet würde, wobei im zweiten Signalrahmen der sonst für die Organisationssignale vorgesehene Kanal anderweitig genutzt werden könnte. Durch diese Frequenzbandaufteilung würden sich die Bitraten in den einzelnen Signalrahmen verringern. Um dies zu realisieren, müßten auf der Sendeseite der in Fig. 4 dargestellten Feststation für jedes Frequenzband ein eigener Modulator und ein eigener Sendeverstärker vorgesehen werden.

- - - - -

ANT Nachrichtentechnik GmbH
Gerberstr. 33
D-7150 Backnang

E7/Th/kön
BK 84/46

Patentansprüche

1. Mobilfunksystem für die Übertragung digitaler Signale zwischen mobilen Teilnehmern und stationären Teilnehmern, die mit Funkvermittlungsstellen in Verbindung stehen, wobei Feststationen die von den mobilen Teilnehmern ausgesendeten Signale empfangen und sie an die Funkvermittlungsstellen weiterleiten bzw. die von den Funkvermittlungsstellen kommenden Signale an die mobilen Teilnehmer aussenden, dadurch gekennzeichnet, daß die Feststationen die von den Funkvermittlungsstellen gelieferten Signalkanäle (KS1 ... KSn), durch Multiplexen in Signalrahmen zusammengefaßt, aussenden und daß die Feststationen für jeden der von den mobilen Teilnehmern einzeln ausgesendeten Signalkanäle einen eigenen Empfänger (E1 ... En) besitzen.

2. Mobilfunksystem nach Anspruch 1, dadurch gekennzeichnet, daß in der Funkvermittlungsstelle Sprachsignalkanäle aus dem Fernmeldenetz, Datensignalkanäle aus dem Datennetz und Nutzsignal-, Steuerungs- und Organisationssignalkanäle mittels eines Multiplexers (13) zu einem gemeinsamen Übertragungskanal zusammengefaßt werden, der einer zugehörigen Feststation zugeführt wird, und daß ein von der Feststation kommender Übertragungskanal mittels eines Demultiplexers (13) in seine Einzelkanäle aufgetrennt wird und diese Einzelkanäle auf das Fernmeldenetz, das Datennetz bzw. andere Funkvermittlungsstellen aufgeteilt werden.

3. Mobilfunksystem nach Anspruch 2, dadurch gekennzeichnet, daß in der Funkvermittlungsstelle die aus dem Fernmeldenetz oder von einer anderen Funkvermittlungsstelle kommenden pulskodemodulierten Sprachsignale von einem vor dem Multiplexer (13) angeordneten Kodewandler (11) in einen Basiskode, in den auch die Datensignale kodiert sind, umgewandelt werden, bzw. mit diesem Kodewandler (11) die von der Feststation kommenden basiskodemodulierten Sprachsignale in pulskodemodulierte Sprachsignale zurückgewandelt werden.

4. Mobilfunksystem nach Anspruch 3, dadurch gekennzeichnet, daß der Kodewandler (11) ein Vocoder ist.

5. Mobilfunksystem nach Anspruch 2 oder 3, dadurch gekennzeichnet, daß ein Schlüsselgerät (12) die zur Feststation übertragenen basiskodierten Signale verschlüsselt und die von der Feststation kommenden basiskodierten Signale entschlüsselt.

6. Mobilfunksystem nach einem der vorhergehenden Ansprüche, dadurch gekennzeichnet, daß in der Feststation aus dem von der Funkvermittlungsstelle kommende Übertragungskanal die für die Feststation bestimmten Steuer- und Organisationssignale an eine Steuereinheit (20) abgezweigt werden, daß der die Nutzsignalkanäle mit den Sprach- und Datensignalen enthaltende Teil des Übertragungskanals in einem Multiplexer (21) mit einem von der Steuereinheit abgegebenen, für die Mobilstationen bestimmten Organisationskanal zu einem gemeinsamen Signalrahmen zusammengefaßt werden, der nach einer Kodewandlung (22) in einen für die Funkübertragung störungssicheren Übertragungskode moduliert und ausgesendet wird, daß die einzelnen Empfänger, bestehend aus den Empfängern (E1 ... En) für die Nutzsignalkanäle, einem Empfänger (EOG) für einen Organisationssignalkanal und einen Empfänger (EM) für einen Meßsignalkanal zur Ermittlung der Qualität des Nutzsignals eines mobilen Teilnehmers, der auf einem Signalkanal einer Nachbarfeststation sendet, die Signale demodulieren, eine Taktrückgewinnung, eine Kanalsynchronisierung und eine Wandlung des Übertragungskodes in den Basiskode durchführen, daß die Empfänger (E1 ... En, EM) für die Nutzsignalkanäle und den Meßsignalkanal eine Laufzeit- und Qualitätsmessung der empfangenen Signale vornehmen und ihre Meßergebnisse an die Steuereinheit (20) zur Auswertung weitergeben, daß die Nutzsignalkanäle und der Organisationssignalkanal mit den von der Steuereinheit (20) gelieferten Meßergebnissen mittels eines Multiplexers (26) zu einem gemeinsamen Übertragungskanal zusammengefaßt werden, der an die Funkvermittlungsstelle weitergeleitet wird und daß die Funkvermittlungsstelle diejenige Feststation in den Funkverkehr einschaltet, die nach den Meßergebnissen die beste Empfangssignalqualität aufweist.

7. Mobilfunksystem nach Anspruch 6, dadurch gekennzeichnet, daß der von der Feststation an die mobilen Teilnehmer auszusendende Übertragungskanal auf mehrere getrennte Frequenzbänder aufgeteilt wird.

8. Mobilfunksystem, nach Anspruch 1, dadurch gekennzeichnet, daß der mobile Teilnehmer mit einem Funktelefon ausgestattet ist, in dem der empfangene Signalrahmen dekodiert, der Organisationskanal von den Nutzsignalkanälen des Signalrahmens abgetrennt und einer Funktelefonsteuerung (32) zugeführt, aus den Nutzsignalkanälen der dem jeweiligen mobilen Teilnehmer zugeordnete Nutzsignalkanal ausgeblendet und die Sprachsignale dieses Nutzsignalkanals nach einer Kodewandlung in den Basiskode in ein Analogsignal umgesetzt wird, daß ein auszusendendes Sprachsignal nach einer Analog-Digital-Umsetzung in den Basiskode kodiert wird, dieser basiskodierte Nutzsignalkanal zusammen mit einem von der Funktelefonsteuerung (32) gelieferten Organisationskanal auf einen Kanalumschalter (35) gegeben wird, der entweder den Organisationskanal, falls kein Nutzsignal vorliegt, oder den Nutzsignalkanal an einen Kodewandler (36), der die Wandlung vom Basiskode auf den Übertragungskode vornimmt, durchschaltet und daß der Signalkanal im Übertragungskode nach einer Modulation ausgesendet wird.

9. Mobilfunksystem nach Anspruch 8, dadurch gekennzeichnet, daß in dem Funktelefon ein Schlüsselgerät (33) vorhanden ist, das im Basiskode vorliegende Sprach- und Datensignale ver- bzw. entschlüsselt.

10. Mobilfunksystem nach einem der vorhergehenden Ansprüche, dadurch gekennzeichnet, daß jeweils mehrere zu übertragende Signalrahmen in Überrahmen zusammengefaßt werden, daß für jeden mobilen Teilnehmer zunächst in nur einem Signalrahmen eines Überrahmens für ihn bestimmte Information enthalten ist, daß der mobile Teilnehmer während der Übertragungszeit der anderen keine für ihn bestimmte Information enthaltenden Signalrahmen die Signalqualität anderer Feststationen mißt.

11. Mobilfunksystem nach einem der vorhergehenden Ansprüche, dadurch gekennzeichnet, daß der mobile Teilnehmer auf Informationen, die von einer Feststation an den mobilen Teilnehmer in einem Organisationskanal übertragen werden, in einem um mehrere Signalrahmen zeitlich versetzten Organisationskanal antwortet.

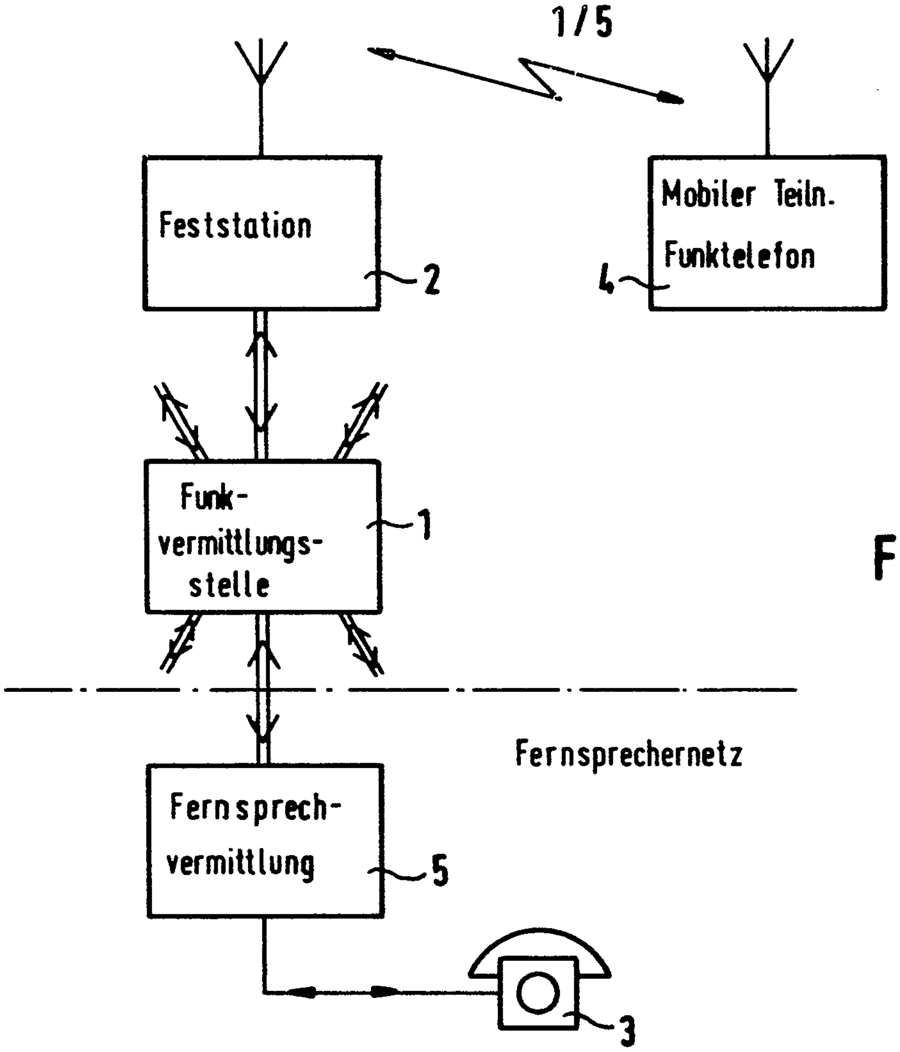
Feststation
2
Mobiler Teiln.
Funktelefon
4
Funk-
vermittlungs-
stelle
1
Fernsprechernetz
Fernsprech-
vermittlung
5
3

FIG. 1

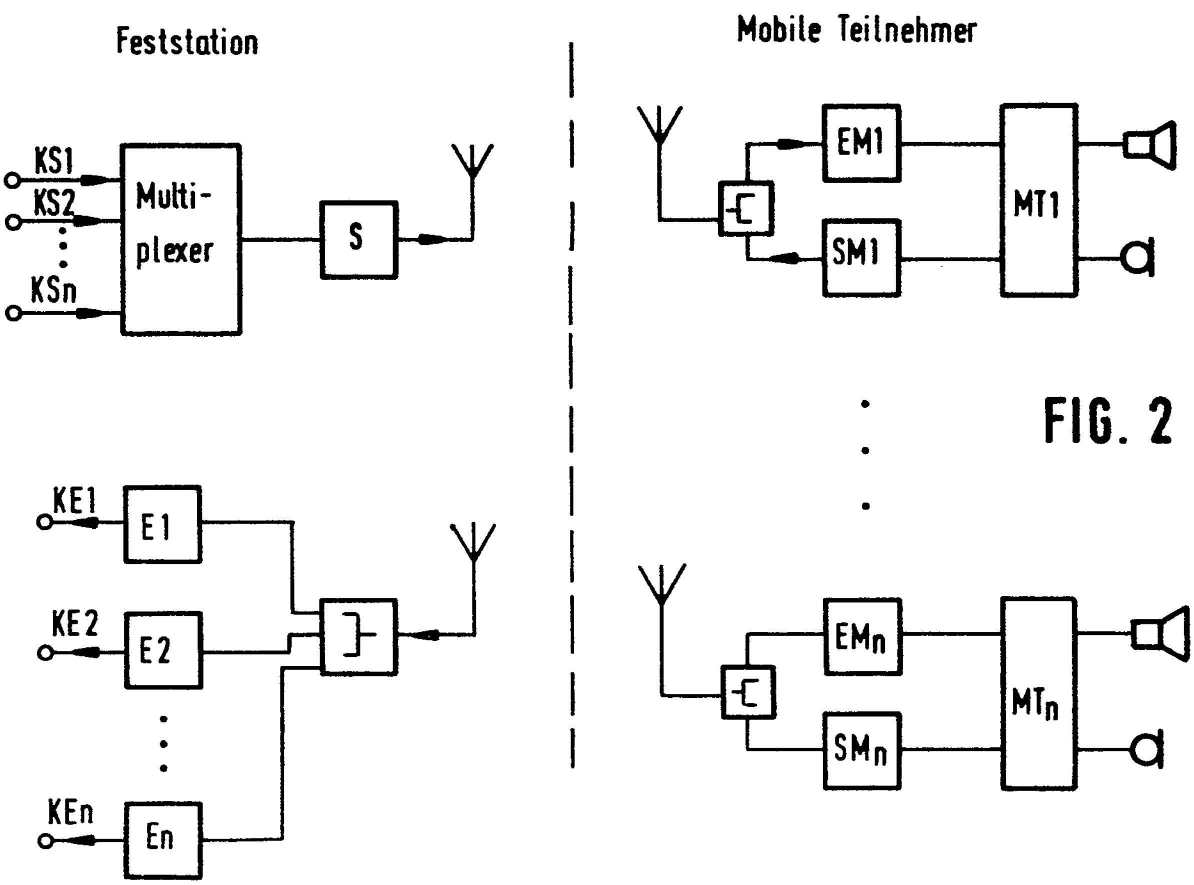
Feststation
Mobile Teilnehmer
KS1
KS2
KSn
Multi-
plexer
S
EM1
SM1
MT1
KE1
KE2
KEn
E1
E2
En
EMn
SMn
MTn

FIG. 2

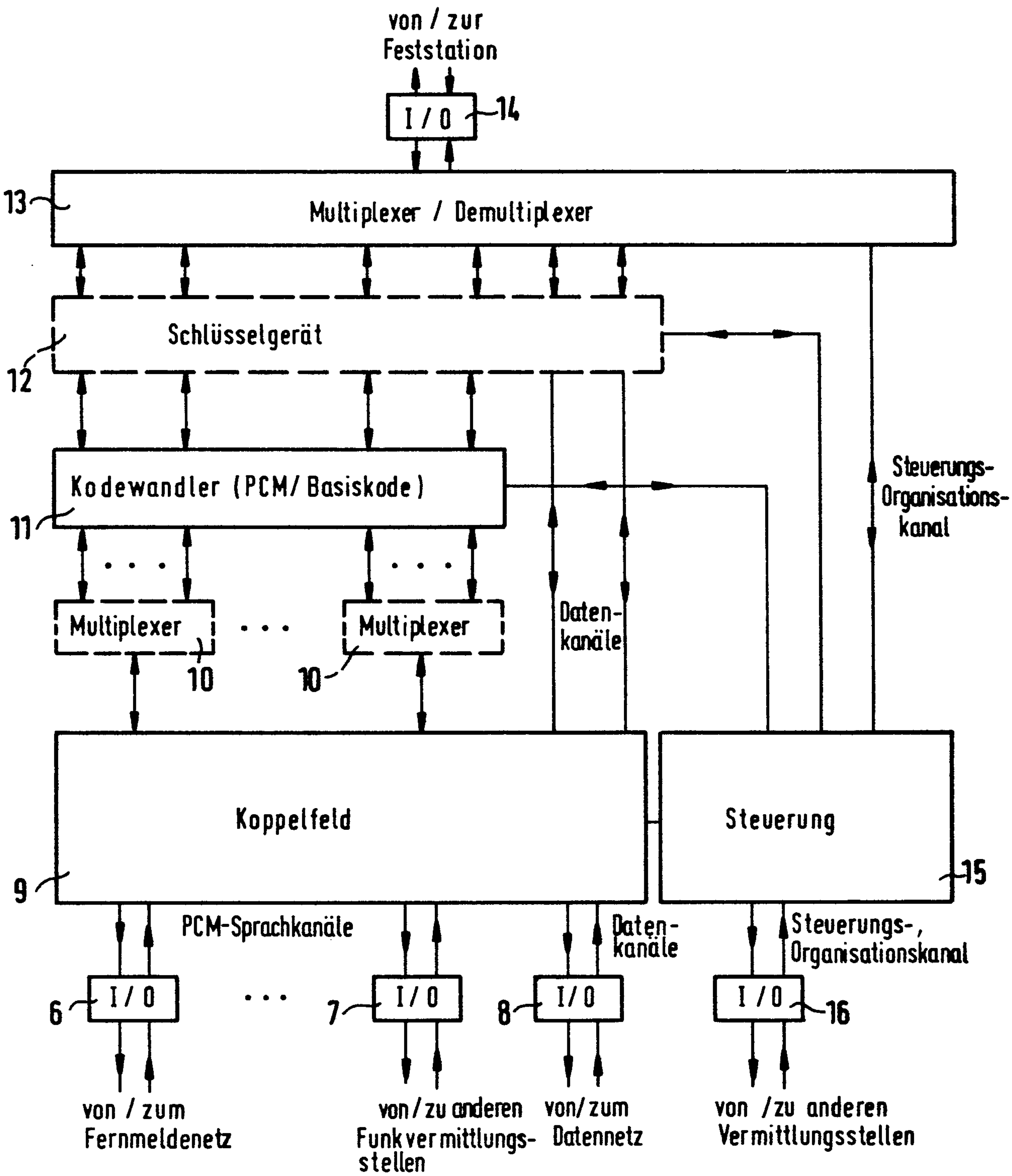
von / zur
Feststation
I / O
14
13
Multiplexer / Demultiplexer
Schlüsselgerät
12
Kodewandler (PCM/ Basiskode)
11
Steuerungs-
Organisations-
kanal
Multiplexer
Multiplexer
10
10
Daten-
kanäle
Koppelfeld
Steuerung
9
15
PCM-Sprachkanäle
Daten-
kanäle
Steuerungs-,
Organisationskanal
6
I / O
7
I / O
8
I / O
I / O
16
von / zum
Fernmeldenetz
von/zu anderen
Funkvermittlungs-
stellen
von/zum
Datennetz
von /zu anderen
Vermittlungsstellen

FIG. 3

0163647

3 / 5

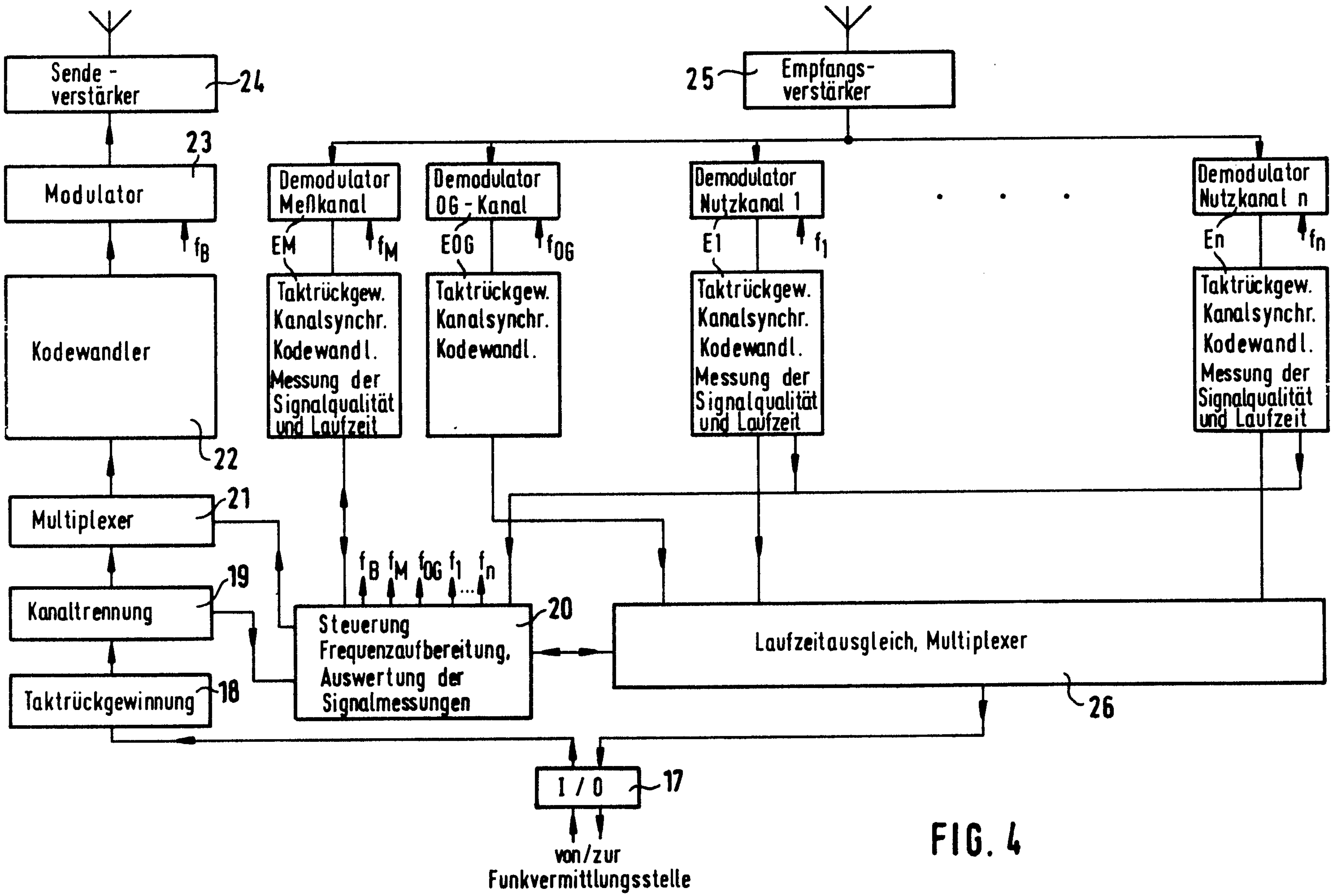


FIG. 4

FIG. 5

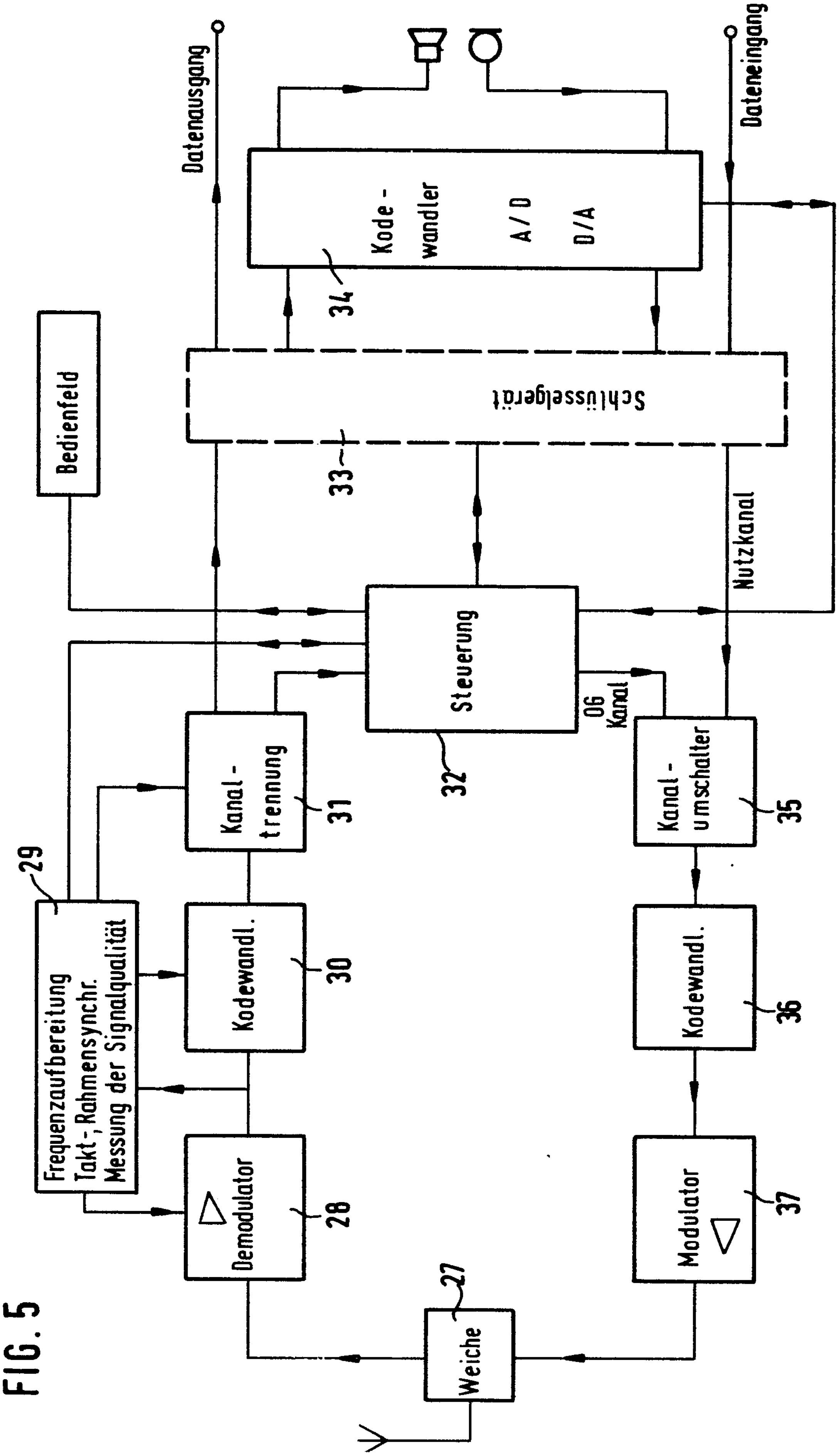
Datenausgang
Dateneingang
Kode-
wandler
A/D
D/A
34
Bedienfeld
Schlüsselgerät
33
Nutzkanal
Steuerung
32
OG
Kanal
Kanal-
trennung
31
Kanal-
umschalter
35
29
Frequenzaufbereitung
Takt-, Rahmensynchr.
Messung der Signalqualität
Kodewandl.
30
Kodewandl.
36
Demodulator
28
Modulator
37
Weiche
27

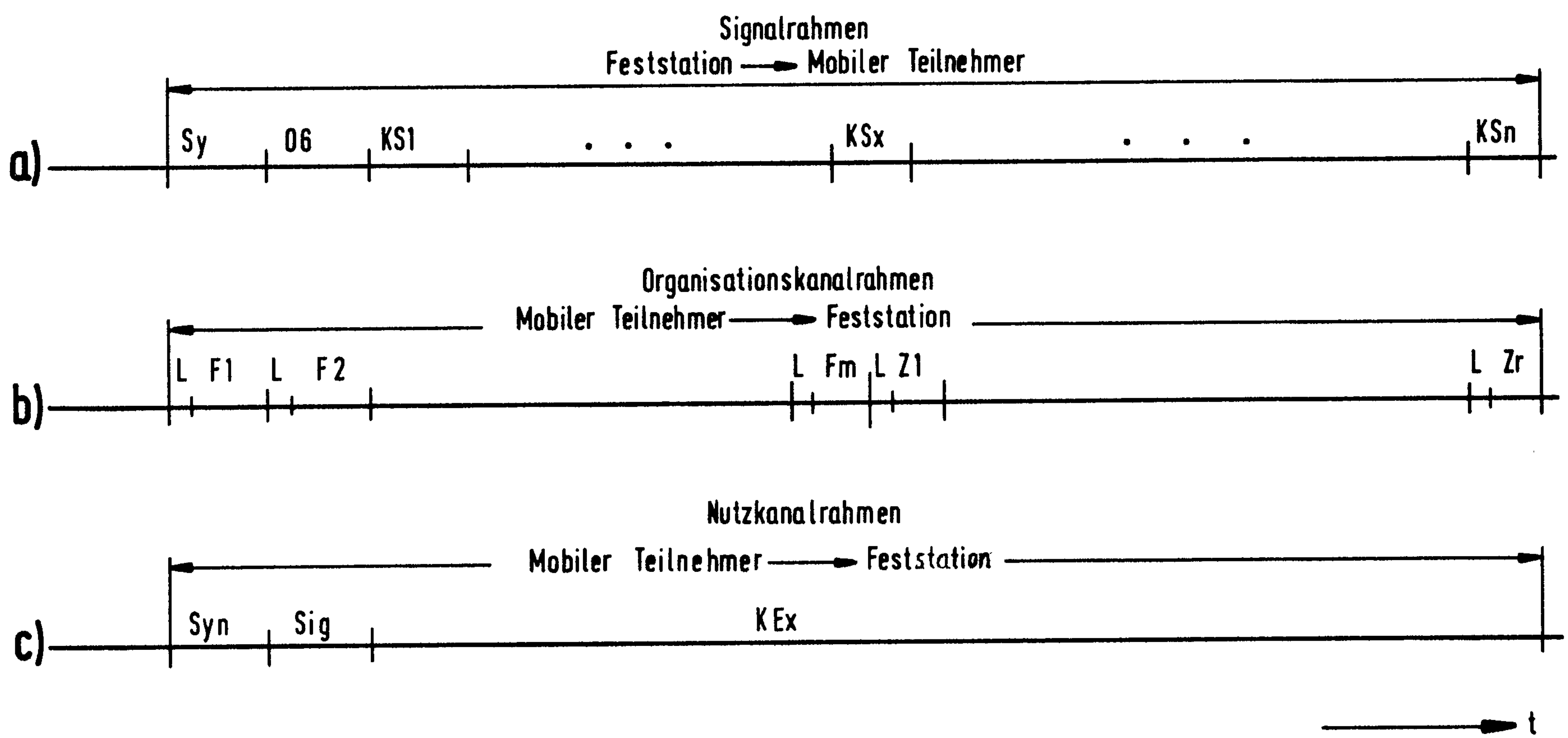
Signalrahmen
Feststation → Mobiler Teilnehmer
a)
Sy
06
KS1
KSx
KSn
Organisationskanalrahmen
Mobiler Teilnehmer → Feststation
b)
L F1 L F2
L Fm L Z1
L Zr
Nutzkanalrahmen
Mobiler Teilnehmer → Feststation
c)
Syn
Sig
KEx
t

FIG. 6